# EUROPÄISCHE PATENTANMELDUNG

(11) **EP 4 660 044 A1**
(43) Veröffentlichungstag der Anmeldung: **10.12.2025**
(21) Anmeldenummer: 24179737.2
(22) Anmeldetag: 04.06.2024
(51) Int. Cl.: B60W 50/14

(54) **VERFAHREN ZUR ERZEUGUNG EINER AKUSTISCHEN FAHRTZUSTANDSMELDUNG FÜR EINEN LANDWIRTSCHAFTLICHEN TRAKTOR**

(71) Anmelder: Deere & Company, Moline, IL 61265 (US)
(72) Erfinder: Schreieck, Lucas, Mannheim (DE)
(74) Vertreter: Dehnhardt, Florian Christopher

(57) **Zusammenfassung**

Verfahren zur Erzeugung einer akustischen Fahrtzustandsmeldung für einen landwirtschaftlichen Traktor (10), bei dem von einer Kontrolleinheit (14) eine für eine aktuelle Fahrtgeschwindigkeit des landwirtschaftlichen Traktors (10) charakteristische Fahrtgeschwindigkeitsgröße ermittelt sowie mit einem vorgegebenen Höchstwert verglichen wird, um bei erkanntem Überschreiten des vorgegebenen Höchstwerts einen in einem Fahrerstand (26) des landwirtschaftlichen Traktors (10) angeordneten Signalgeber (20) zur Erzeugung einer akustischen Fahrttempoinformation anzusteuern.

## Beschreibung

Die Erfindung betrifft ein Verfahren zur Erzeugung einer akustischen Fahrtzustandsmeldung für einen elektrisch angetriebenen landwirtschaftlichen Traktor.

Auch im Landmaschinenbereich spielt die Elektrifizierung von bislang mittels eines Verbrennungsmotors betriebenen Fahrzeugaggregaten eine zunehmende Rolle. Bei landwirtschaftlichen Traktoren betrifft dies je nach Einsatzzweck auch den Fahrantrieb. Hat es das Betriebsgeräusch konventioneller Verbrennungsmotoren dem Fahrer ermöglicht, ohne Blick auf ein Tachometer auf die aktuelle Fahrtgeschwindigkeit des landwirtschaftlichen Traktors zu schließen, so ist dies aufgrund der erhöhten Laufruhe elektrischer Antriebe meist nicht ohne weiteres möglich.

Die erhöhte Laufruhe derartiger elektrischer Antriebe hat unter anderem dazu geführt, dass im PKW-Bereich geräuscherzeugende Einrichtungen vorgeschrieben sind, die beim Rückwärtsrangieren sowie bei Fahrtgeschwindigkeiten von bis zu 20 km/h ein für Außenstehende wahrnehmbares Fahrtgeräusch imitieren. Bei darüber hinausgehenden Fahrtgeschwindigkeiten unterbleibt eine Geräuscherzeugung, da dann das Abrollgeräusch der Reifen hörbar überwiegt.

Angesichts dessen ist es Aufgabe der vorliegenden Erfindung, ein Verfahren der eingangs genannten Art an die Gegebenheiten eines elektrisch angetriebenen landwirtschaftlichen Traktors anzupassen.

Diese Aufgabe wird durch ein Verfahren zur Erzeugung einer akustischen Fahrtzustandsmeldung für einen elektrisch angetriebenen landwirtschaftlichen Traktor mit den Merkmalen des Patentanspruchs 1 gelöst.

Das Verfahren zur Erzeugung einer akustischen Fahrtzustandsmeldung für einen landwirtschaftlichen Traktor sieht vor, dass von einer Kontrolleinheit eine für eine aktuelle Fahrtgeschwindigkeit des landwirtschaftlichen Traktors charakteristische Fahrtgeschwindigkeitsgröße ermittelt sowie mit einem vorgegebenen Höchstwert verglichen wird, um bei erkanntem Überschreiten des vorgegebenen Höchstwerts einen in einem Fahrerstand des landwirtschaftlichen Traktors angeordneten Signalgeber zur Erzeugung einer akustischen Fahrttempoinformation anzusteuern.

Diese Vorgehensweise trägt den Gegebenheiten landwirtschaftlicher Traktoren insofern Rechnung, als hier bei vergleichsweise geringen Fahrtgeschwindigkeiten, wie sie bei der Durchführung von Bodenbearbeitungsmaßnahmen auf einer Ackerfläche typisch sind, eine Rückmeldung hinsichtlich des Fahrttempos in erster Linie aufgrund der über die Traktorräder einwirkenden Bodenunebenheiten erfolgt. Bei höheren Fahrtgeschwindigkeiten, wie sie beim Befahren von befestigten Wirtschaftswegen und Straßen auftreten, sind diese Einwirkungen weitaus geringer und vermögen dem Fahrer nicht länger einen verlässlichen Anhaltspunkt für das tatsächliche Fahrttempo des landwirtschaftlichen Traktors zu geben. Durch entsprechende Wahl des für die Fahrtgeschwindigkeitsgröße vorgegebenen Höchstwerts kann die Erzeugung bzw. Ausgabe der akustischen Fahrttempoinformation derart erfolgen, dass Wahrnehmbarkeit und Einschätzung des tatsächlichen Fahrttempos für den Fahrer bei einem mit einem elektrischen Antrieb ausgestatteten landwirtschaftlichen Traktor signifikant verbessert werden. Der Höchstwert der Fahrtgeschwindigkeit wird hierzu typischerweise im Bereich von 30 km/h vorgegeben.

Der Fahrerstand kann zur Außenumgebung hin offen und lediglich durch einen Überrollbügel geschützt sein, es kann sich jedoch auch um eine geschlossene Fahrerkabine handeln. Als Signalgeber dient beispielsweise ein im Bereich einer Lenksäule oder einer Kabineninnenverkleidung eingebauter Lautsprecher, der mit einem von der Kontrolleinheit ansteuerbaren Geräusch- bzw. Akustiksynthesizer elektrisch verbunden ist.

Vorteilhafte Weiterbildungen des erfindungsgemäßen Verfahrens gehen aus den Unteransprüchen hervor.

Vorzugsweise wird die Intensität und/oder Sequenz der erzeugten akustischen Fahrttempoinformation von der Kontrolleinheit nach Maßgabe des Umfangs der Überschreitung des vorgegebenen Höchstwerts und damit mit weiter steigender Fahrtgeschwindigkeit angepasst. Dies kann durch Anhebung der Laustärke und/oder Erhöhung der Frequenz einer mittels des Signalgebers erzeugten Tonfolge, insbesondere durch entsprechende Modulation eines kontinuierlichen Tons bzw. Geräuschs oder durch entsprechende Ausgabe von Einzeltönen erfolgen. Im einfachsten Fall kann auch die Ausgabe eines einzelnen Hinweistons vorgesehen sein.

Zusätzlich besteht die Möglichkeit, dass die Erzeugung der akustischen Fahrttempoinformation unter dem Vorbehalt einer von der Kontrolleinheit erkannten Straßentransportfahrt des landwirtschaftlichen Traktors erfolgt. Aufgrund eines Betriebs des landwirtschaftlichen Traktors im öffentlichen Straßenverkehr mit Fahrtgeschwindigkeiten von bis zu 60 km/h ist hier eine korrekte Einschätzung des Fahrttempos für den Fahrer besonders wertvoll. Dies gilt vor allem dann, wenn die Straßentransportfahrt mit einem an dem landwirtschaftlichen Traktor angebrachten (beladenen) Anhänger durchgeführt wird.

Auf das Vorliegen einer Straßentransportfahrt kann von der Kontrolleinheit durch Auswertung von in einer Speichereinheit eines GPS-Navigationssystems hinterlegten kartografischen Informationen geschlossen werden. Hierzu nimmt die Kontrolleinheit einen Vergleich der mittels des GPS-Navigationssystems bestimmten aktuellen Geo-Position mit den in der Speichereinheit hinterlegten kartografischen Informationen vor, um anhand dessen zu bestimmen, ob sich der landwirtschaftliche Traktor gerade auf einem durch einen befestigten Wirtschaftsweg oder eine öffentliche Straße gebildeten Transportweg befindet.

Das erfindungsgemäße Verfahren zur Erzeugung einer akustischen Fahrtzustandsmeldung für einen elektrisch angetriebenen landwirtschaftlichen Traktor wird im Folgenden anhand der beigefügten Zeichnungen näher beschrieben. Es zeigen:
- Fig. 1: ein als Flussdiagramm veranschaulichtes Ausführungsbeispiel des erfindungsgemäßen Verfahrens zur Erzeugung einer akustischen Fahrtzustandsmeldung für einen elektrisch angetriebenen landwirtschaftlichen Traktor, und
- Fig. 2: eine schematisch dargestellte Anordnung zur Durchführung des erfindungsgemäßen Verfahrens zur Erzeugung einer akustischen Fahrtzustandsmeldung für einen elektrisch angetriebenen landwirtschaftlichen Traktor.

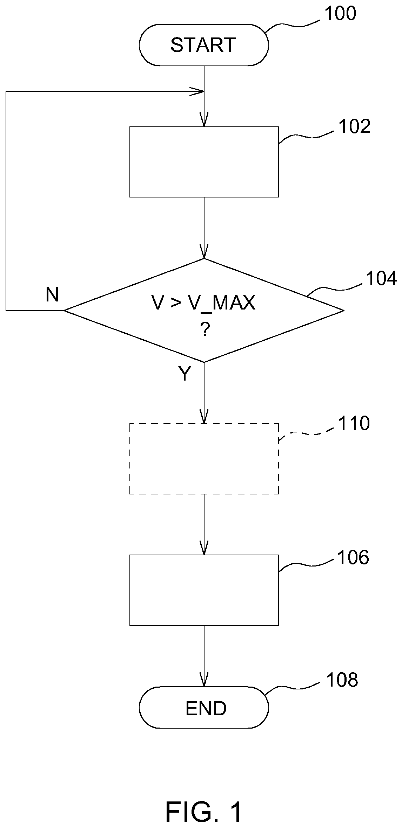

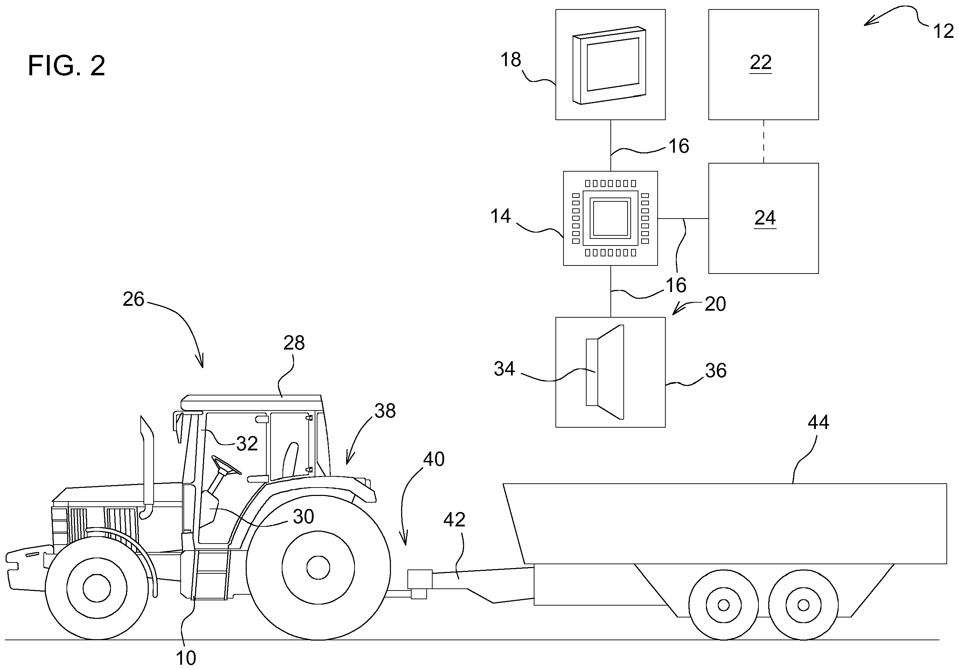

Fig. 1 zeigt ein als Flussdiagramm dargestelltes Ausführungsbeispiel des erfindungsgemäßen Verfahrens zur Erzeugung einer akustischen Fahrtzustandsmeldung für einen elektrisch angetriebenen landwirtschaftlichen Traktor, wobei dieses nachfolgend unter Bezugnahme auf die zu dessen Durchführung vorgesehene Anordnung gemäß Fig. 2 beschrieben werden soll.

Die in dem landwirtschaftlichen Traktor 10 untergebrachte Anordnung 12 umfasst eine mikroprozessorgesteuerte Kontrolleinheit 14, die über einen CAN-Datenbus 16 mit einer Bedienschnittstelle 18, einem Signalgeber 20, sowie einem mit einer Speichereinheit 22 in Verbindung stehenden GPS-Navigationssystem 24 kommuniziert.

Beispielsgemäß weist der landwirtschaftliche Traktor 10 einen Fahrerstand 26 in Gestalt einer geschlossenen Fahrerkabine 28 auf. Als Signalgeber 20 dient ein im Bereich einer Lenksäule 30 oder einer Kabineninnenverkleidung 32 des landwirtschaftlichen Traktors 10 eingebauter Lautsprecher 34, der mit einem von der Kontrolleinheit 14 ansteuerbaren Geräusch- bzw. Akustiksynthesizer 36 elektrisch verbunden ist. Alternativ kann der Fahrerstand 26 auch zur Außenumgebung hin offen und lediglich durch einen Überrollbügel geschützt sein.

Weiterhin befindet sich im Heckbereich 38 des landwirtschaftlichen Traktors 10 eine (in der gewählten Ansicht nicht erkennbare) Kupplungseinrichtung 40 in Gestalt eines Kupplungsmauls, an dem sich eine Deichsel 42 eines gezogenen Anbau- oder Zusatzgeräts 44 anbringen lässt. Bei dem gezogenen Anbau- oder Zusatzgerät 44 handelt es sich zum Beispiel um einen Anhänger oder Ladewagen.

Gemäß Fig. 1 wird das von der Kontrolleinheit 14 durchgeführte Verfahren in einem Startschritt 100 vom Bediener durch Aufrufen der entsprechenden Assistenzfunktion über die Bedienschnittstelle 18 gestartet, woraufhin in einem ersten Hauptschritt 102 von der Kontrolleinheit 14 auf Grundlage von am CAN-Datenbus 16 anliegenden Raddrehzahlinformationen eine für eine aktuelle Fahrtgeschwindigkeit des landwirtschaftlichen Traktors 10 charakteristische Fahrtgeschwindigkeitsgröße v ermittelt wird.

Die im ersten Hauptschritt 102 ermittelte Fahrtgeschwindigkeitsgröße v wird von der Kontrolleinheit 14 anschließend in einem zweiten Hauptschritt 104 mit einem vorgegebenen Höchstwert v_max verglichen. Wird von der Kontrolleinheit 14 erkannt, dass der vorgegebene Höchstwert v_max überschritten ist, so wird in einem dritten Hauptschritt 106 der im Fahrerstand 26 des landwirtschaftlichen Traktors 10 angeordnete Signalgeber 20 zur Erzeugung einer akustischen Fahrttempoinformation angesteuert. Andernfalls kehrt das Verfahren zum ersten Hauptschritt 102 zurück, um erneut durchlaufen zu werden. Der Höchstwert v_max der Fahrtgeschwindigkeitsgröße v wird im Bereich von 30 km/h vorgegeben.

Hierbei wird von der Kontrolleinheit 14 im dritten Hauptschritt 106 die Intensität und/oder Sequenz der erzeugten akustischen Fahrttempoinformation nach Maßgabe des Umfangs der Überschreitung des vorgegebenen Höchstwerts v_max und damit mit weiter steigender Fahrtgeschwindigkeit angepasst. Dies erfolgt durch Anhebung der Laustärke und/oder Erhöhung der Frequenz einer mittels des Signalgebers 20 erzeugten Tonfolge, durch entsprechende Modulation eines kontinuierlichen Tons bzw. Geräuschs (beispielsweise eines synthetisch erzeugten Motorgeräuschs) oder durch entsprechende Ausgabe von Einzeltönen. Im einfachsten Fall ist die Ausgabe eines einzelnen Hinweistons vorgesehen.

Anschließend wird das Verfahren in einem Schlussschritt 108 beendet.

Gemäß einer optionalen Ausgestaltung des Verfahrens ist dem dritten Hauptschritt 106 ein Zwischenschritt 110 vorgeschaltet, in dem zusätzlich überprüft wird, ob der landwirtschaftliche Traktor 10 im öffentlichen Straßenverkehr betrieben wird, mithin eine Straßentransportfahrt vorliegt. Auf das Vorliegen einer Straßentransportfahrt schließt die Kontrolleinheit 14 durch Auswertung von in der Speichereinheit 22 des GPS-Navigationssystem 24 hinterlegten kartografischen Informationen. Genauer gesagt nimmt die Kontrolleinheit 14 einen Vergleich der mittels des GPS-Navigationssystems 24 bestimmten aktuellen Geo-Position mit den in der Speichereinheit 22 hinterlegten kartografischen Informationen vor, um anhand dessen zu bestimmen, ob sich der landwirtschaftliche Traktor 10 gerade auf einem durch einen befestigten Wirtschaftsweg oder eine öffentliche Straße gebildeten Transportweg befindet.

Mit anderen Worten erfolgt die Erzeugung der akustischen Fahrttempoinformation bei dieser Ausgestaltung unter dem Vorbehalt einer von der Kontrolleinheit 14 erkannten Straßentransportfahrt des landwirtschaftlichen Traktors 10.

## Patentansprüche

1. Verfahren zur Erzeugung einer akustischen Fahrtzustandsmeldung für einen landwirtschaftlichen Traktor, bei dem von einer Kontrolleinheit (14) eine für eine aktuelle Fahrtgeschwindigkeit des landwirtschaftlichen Traktors (10) charakteristische Fahrtgeschwindigkeitsgröße (v) ermittelt sowie mit einem vorgegebenen Höchstwert (v_max) verglichen wird, um bei erkanntem Überschreiten des vorgegebenen Höchstwerts (v_max) einen in einem Fahrerstand (26) des landwirtschaftlichen Traktors (10) angeordneten Signalgeber (20) zur Erzeugung einer akustischen Fahrttempoinformation anzusteuern.

2. Verfahren nach Anspruch 1, **dadurch gekennzeichnet, dass** die Intensität und/oder Sequenz der erzeugten akustischen Fahrttempoinformation von der Kontrolleinheit (14) nach Maßgabe des Umfangs der Überschreitung des vorgegebenen Höchstwerts (v_max) angepasst wird.

3. Verfahren nach Anspruch 1 oder 2, **dadurch gekennzeichnet, dass** die Erzeugung der akustischen Fahrttempoinformation unter dem Vorbehalt einer von der Kontrolleinheit (14) erkannten Straßentransportfahrt des landwirtschaftlichen Traktors (10) erfolgt.

4. Verfahren nach Anspruch 3, **dadurch gekennzeichnet, dass** auf das Vorliegen einer Straßentransportfahrt von der Kontrolleinheit (14) durch Auswertung von in einer Speichereinheit (22) eines GPS-Navigationssystems (24) hinterlegten kartografischen Informationen geschlossen wird.
